# EUROPEAN PATENT SPECIFICATION

(11) **EP 0 514 156 B1**
(45) Date of publication and mention of the grant of the patent: **06.11.1996**
(21) Application number: 92304325.1
(22) Date of filing: 13.05.1992
(51) Int. Cl.: G11B 23/40, G11B 33/04

(54) **Improved compact disc package**
Verbesserte Vepackung für Kompakt-Platte
Emballage amélioré pour disque compact

(30) Priority: 16.05.1991 US 701078; 16.01.1992 US 821062
(43) Date of publication of application: 19.11.1992
(73) Proprietor: Spector, Donald, Union City New Jersey 07087 (US)
(72) Inventor: Spector, Donald, Union City New Jersey 07087 (US)
(74) Representative: Milhench, Howard Leslie

(56) References cited:
- FR-A- 2 339 227
- FR-A- 2 620 258
- US-A- 2 777 574
- US-A- 4 402 405
- US-A- 4 850 731

## Description

### Field of Invention:

This invention relates generally to packages for compact disc audio or video recordings, and in particular to a compact disc package which serves not only to protectively store the disc and to expose a picture printed on the disc, but also makes it possible to play with the packages in the manner of baseball cards.

### Status of Prior Art:

Digital techniques are now widely used to make sound and video recordings. Thus when recording music or speech, the analog signal output of the microphone amplifier is sampled and converted into a stream of digital bits that are recorded on magnetic tape and then transferred from the tape to a rotating master disc. The recording on the master disc is in the form of microscopic indentations in a spiral track on one surface of the disc. The master disc is used to create stampers for pressing vinyl records, called compact discs or CD's.

The player for the CD record uses a laser beam optical pick-up and makes no physical contact with the disc. A similar technique is used to make digital video recordings, the resultant video compact discs being referred to as VCD's. As used herein, the term compact disc encompasses both CD's and VCD's.

The conventional package for a compact disc consists of a rectangular casing molded of transparent, flexible plastic material having two side-by-side compartments, one to accommodate a transparent, rigid plastic cassette housing the disc, the other containing a printed folder. Printed on the front and rear cover of the folder is a picture of the recorded performer, say, a rock star. The rear cover also has printed thereon the identify of the songs recorded on the disc.

In order to obtain access to the disc in a conventional DC package, one must break open the sealed casing, and then remove the disc from its cassette, the ruptured casing being discarded. One can also discard the folder, for the identity of the performer and of the songs or music performed is printed on the unrecorded face of the compact disc.

A conventional CD package, because of its complex nature, is relatively expensive to make. Moreover, the shelf or counter space taken by a conventional package in terms of length, width and depth is much greater than that taken by the disc itself. This presents a problem; for in the typical retail establishment, shelf and counter space are at a premium, and the dimensions of the conventional package limit the number of packages that can be kept in stock.

A major concern of the present invention is with respect to the educational as well as the entertainment value of CD's or VCD's intended for children. Many children are avid collectors of so-called baseball cards. Each such card carries not only a picture of a well-known baseball player, but also some biographical material regarding the player and his past performance record. To the extent that studying and collecting baseball cards enlarges a child's knowledge of baseball, it has educational value, though some parents may regard such knowledge as trivia.

A child who collects baseball cards usually seeks to add to his collection by trading with other collectors, or by competitive play in which the players flip baseball cards, very much in the fashion of playing heads or tails with coins.

Thus a child who has a particular interest in the New York Yankees baseball team, in order to enlarge his collection of players on this team, will sell or play off cards he holds on "Giants" team players. The present invention provides a compact disc package in a card format so that the package may be manipulated by a child in the manner of a baseball card, yet provide educational benefits far greater than those afforded by baseball cards.

### SUMMARY OF INVENTION

In view of the foregoing, the main object of this invention is to provide a compact disc package in a card format whose dimensions are only somewhat greater than that of the disc housed therein, whereby the package serves both to store and display the disc, and as a playing card.

More specifically, an object of this invention is to provide a package of the above type in which the disc is nested in a circular well formed in a rectangular card, there being printed on a printable surface on the unrecorded face of the disc and in the region of the card surrounding this surface a picture of a character or personage such as that of a well-known baseball player, the recording on the opposing face of the disc being a narrative account or story relating to the pictured character, so that the disc possesses educational as well as entertainment value.

A significant feature of a CD package in a card format in accordance with the invention is that it lends itself to being traded or played with in the manner of baseball cards.

Still another object of the invention is to provide a compact disc package which fully protects the disc housed therein, yet is inexpensive to manufacture and to mass produce as compared to conventional compact disc packages.

Briefly stated, these objects are attained in a package for a compact disc having impressed on one face thereof a sound or video recording (CD or VCD) of a story or other instructive material relating to a particular character such as a sports or entertainment figure, or one which is of historical, political or military importance, the opposing face of the disc having a printable surface thereon. The disc is nested in a circular well formed in a rectangular card having a backing sheet adhered thereto, a circular section of whose inner surface is encircled by the well.

In one embodiment of the invention, on the printable surface of the disc and on the region of the card surrounding this surface is a picture of the character so that a portion of this picture appears on the printable surface, the remainder being on the card. Printed on the inner surface of the backing sheet in the section encircled by the well is the same portion of the picture. Hence when the disc is removed from the well, one still sees the entire picture.

In another embodiment of the invention, the picture of the character is printed within the confines of the printable face of the disc.

The disc-loaded card is inserted in a transparent plastic sleeve having matching dimensions to provide a card-like package which may be manipulated in play activity as well as stored or displayed. To play the disc in an optical player, the card is removed from the sleeve and the disc withdrawn from the card.

### BRIEF DESCRIPTION OF DRAWINGS

For a better understanding of the invention as well as other objects and further features thereof, reference is made to the following detailed description to be read in conjunction with the accompanying drawings, wherein:
Fig. 1 illustrates the printable face on one face of a compact disc included in a package in accordance with the invention;
Fig. 2 shows the opposing reflective recorded face of this disc;
Fig. 3 illustrates the disc when seated within the circular well of a rectangular card included in the package;
Fig. 4 is a transverse section taken in the plane indicated by lines 4-4 in Fig. 3;
Fig. 5 shows the rear of the card;
Fig. 6 illustrates the front of the card as it appears after the disc is removed from the well; and
Fig. 7 illustrates the compact disc, the card in which the disc is to be nested, and the sleeve in which the disc-loaded card is received to complete the package.

### DESCRIPTION OF INVENTION

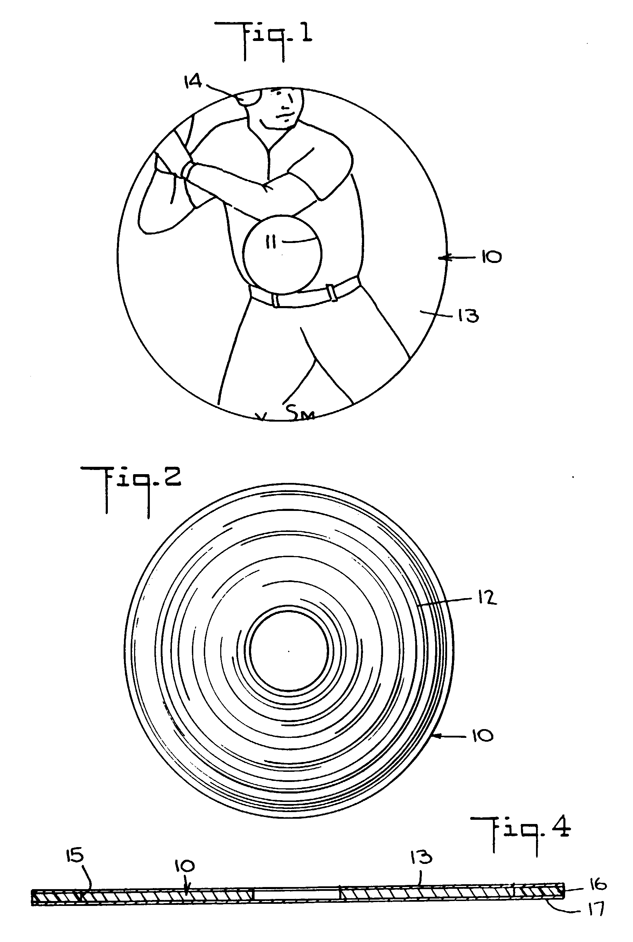

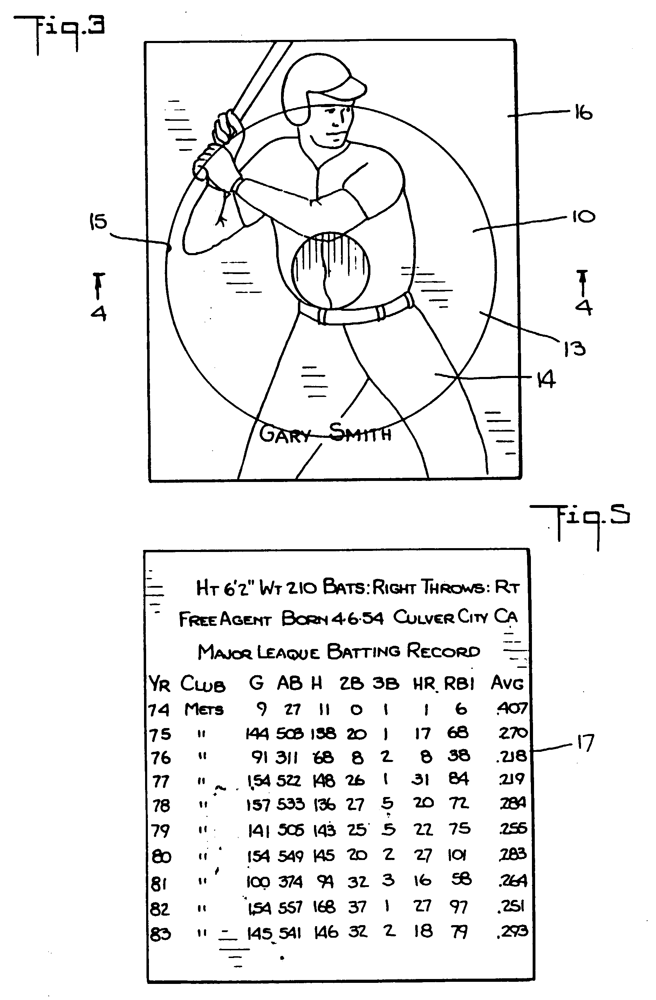

Referring now to Figs. 1 and 2, there is shown a compact disc 10 in accordance with the invention having a center hub hole 11 so that the disc can be mounted on the spindle of an optical player. The disc is formed of transparent plastic material whose shiny recording face 12, as shown in Fig. 2, has a spiral track formed thereon that is coated with a reflective film.

Printed on the surface of a round piece of paper 13 adhered to the opposite unrecorded face of disc 10 is a portion 14 of a picture of a character about whom revolves the story or other subject matter recorded on the other face of the disc. In practice, instead of printing on the surface of paper 13, one may dispense with the paper and print directly on the unrecorded face of the disc.

By way of example only, the picture shown is that of a GARY SMITH, who we shall assume is a famous baseball player. The story recorded on disc 10 may be an account of GARY SMITH's boyhood and how he eventually succeeded in baseball despite a series of setbacks. Since the disc is intended mainly for children, the recording will be at a level understandable to children.

The term "character," as used herein, refers to any figure or personage of historical, political, scientific or military importance, as well as any well-known actor or sports figure that children wish or ought to know more about. The term "character" also includes animals, such as prehistoric dinosaurs and apes who play a role in the evolution of man. Hence the disc recording in all cases is germane to the particular character that is pictured on the disc.

Thus if the picture is that of Babe Ruth, the legendary batter with the New York Yankees, then the CD recording may start out with the theme "Take Me Out to The Ball Game" or Frank Sinatra singing "New York, New York," followed by the roar of the crowd at a baseball stadium, and then a narrative account of Babe Ruth's career.

Whether the recording is that of a sports figure, a historical or any other figure, the recording, since intended to entertain as well as to educate, should not be in the form of a school room lecture but should include dramatic effects to heighten interest in the character, and in doing so, induce the listener to listen to the entire recording.

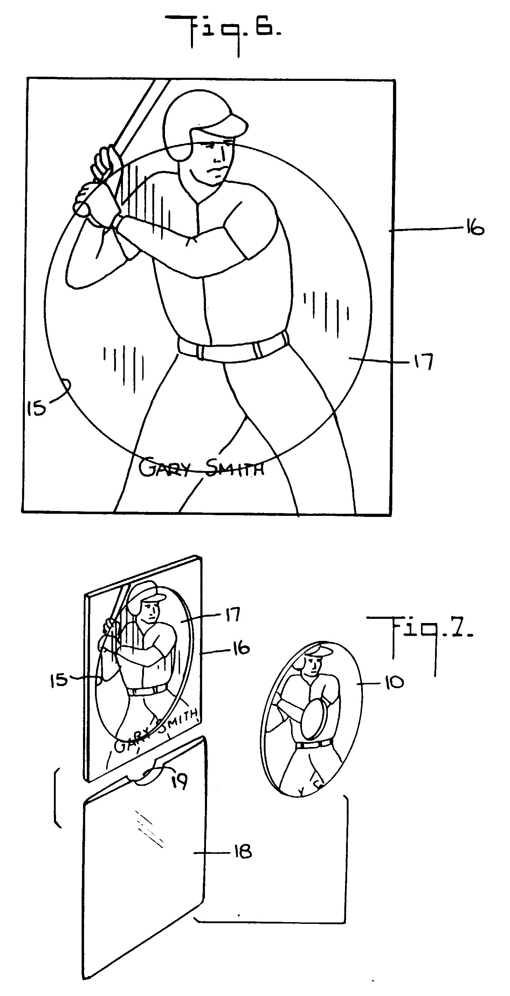

As shown in Figs. 3 and 4, compact disc 10 (whether a CD or VCD) is snugly seated within a circular well 15 die cut or otherwise created in a rectangular card 16 fabricated of flexible material such as paperboard or synthetic plastic, the diameter of the well substantially matching that of the disc.

It will be seen that the remainder of the Gary Smith picture, a portion 14 of which is printed on the disc, as well as the remainder of his name which partially appears on the bottom of printing surface 13 on the disc is printed in the region of card 16 surrounding disc 10, this region being flush with the printing surface 13.

Adhered to the rear side of card 16 is a rectangular paper sheet 17 on which is printed the batting record of Gary Smith as well as other information pertinent to this player. Thus the user who possesses this disc-loaded card not only has a recording relating to Gary Smith and his picture, but also printed data giving the player's performance record. The typical CD has a diameter of about 4½ inches, in which case the dimensions of card 16 would be 5½ by 6 inches (1 inch = 2.54 cm).

As shown in Fig. 6, when disc 10 is removed from the well 15 in card 16 so that it can be played, what is then exposed is that inner section of backing sheet 17 which is encircled by well 15. Printed on this section is the same portion of the picture of Gary Smith which is printed on the printable surface of the disc. Hence whether or not disc 10 is seated in the well, in both cases the user sees the picture of the baseball player.

The advantage of this arrangement is that in flipping baseball cards, the user need not in doing so have the disc seated in the card and thereby run the risk of injuring or dirtying the disc should the card be subjected to rough handling in play. Moreover, the backing sheet which is behind the disc and is flexible may be used to pop the disc out of the card rather than to flex the card in order to remove the disc.

In practice, instead of having a backing sheet to enclose the bottom of the well, the well may take the form of a depression in the card so that no hole is formed therein. In that case, the exposed bottom of the well is printed with the portion of the character picture and the rear of the card has the baseball record printed thereon.

As shown in Fig. 7, card 16, after being loaded by compact disc 10, is then inserted in a pocket or sleeve 18 whose dimensions substantially match those of the card. Sleeve 18 is fabricated of relatively soft, transparent, synthetic plastic material such as polyethylene so that both sides of the card and the disc therein are viewable through the sleeve. Sleeve 18 is provided at its upper end on either side with a finger notch 19 to facilitate removal of the disc-loaded card from the sleeve.

Thus the card-like package is constituted by the disc-loaded card jacketed within the sleeve. This assembly or package, because it is card-like and relatively stiff, may be manipulated or flipped in the manner of a baseball card, so that a child with a stack of such packages can enter into card trading and flip-play activity. Or, as previously explained, only the card may be used in flip-play.

To play a recording, the child removes the disc-loaded card from its sleeve, then takes the disc out of the card and inserts it in a player. Upon completion of play, the child returns the disc to the card and inserts the disc-loaded card back into its sleeve for storage and transportation purposes. In practice, the package may be sealed in a transparent plastic film envelope or jacket, the seal being broken only after the package has been sold.

A child who takes pride in his collection may wish to display it in a wall or board, and for this purpose the card may be provided with a pair of mounting holes which are visible through the clear sleeve. It is then a simple matter to pin the package to a wall or board, the pins going through the soft plastic sleeve corners and the mounting holes in the card. In this display mode, the pictures on the discs face out so that one can exhibit a set of American presidents or famous sports figures, or whatever other characters are in the child's collection.

Whatever the character pictured on the CD or VCD, the sound or video recording is directly related to this character. And since the recording has a duration of at least a half hour, a great deal of information can be supplied in regard to the character to supplement that printed on the card; hence the educational value of the package is high.

while there has been shown and described a preferred embodiment of an improved compact disc package in accordance with the invention, it will be appreciated that many changes and modifications may be made therein without, however, departing from the scope of the Claims. Thus instead of a thin paper backing sheet for the card, a thick sheet or paper board may be used for this purpose laminated to the rear of the card.

Also, instead of printing the picture of the character on the printable surface of the disc and on the region of card 16 surrounding this surface, as shown in Fig. 3, the picture may be printed within the confines of the printable face of the disc opposite to the reflective face on which the recording is impressed. Hence in this embodiment, the scale of the picture is limited to the diameter of the disc.

## Claims

1. A compact disc package in a card format comprising:
(a) a compact disc (10) having a spiral track recording on one face (12) thereof relating to a character such as a sports figure, said disc having on its opposing face (13) a printable surface; and
(b) a rectangular card (16) having a circular recess (15) therein in which the disc (10) can be nested to provide a loaded card (16) in which the printable surface (13) is substantially flush with a region of the card (16) surrounding the disc (10), at least a portion of a picture of the character being printed on this surface.

2. A package as set forth in claim 1, wherein the remainder of the picture is printed in said region surrounding the disc, said card (16) having a backing (17) whose inner section surrounded by said well (15) has the same portion of the picture printed thereon whereby the entire picture is seen whether or not the disc (10) is nested in the well.

3. A package as set forth in claim 1, further including a sleeve (18) formed of transparent plastic material for receiving the disc-loaded card (16) and having substantially the same dimensions whereby the picture is visible through the sleeve.

4. A package as set forth in claim 1, wherein said printable surface (13) is constituted by a round sheet of paper adhered to the opposing face of the disc.

5. A package as set forth in claim 2, wherein said recess (15) is formed by a hole in the card (16) and said backing (17) is a rectangular sheet of paper adhered to the rear of the card to close the rear of the hole.

6. A package as set forth in claim 5, wherein said backing sheet (17) has printed on its rear surface data relating to the character.

7. A package as set forth in claim 3, wherein said sleeve is provided at its upper end with a finger notch (19) to facilitate removal of the disc-loaded card (16).

8. A package as set forth in claim 1, wherein said disc (10) has a sound recording thereon.

9. A package as set forth in claim 1, wherein said disc (10) has a video recording thereon.

10. A package as set forth in claim 1, wherein said card (16) is formed of flexible plastic material.

11. A package as set forth in claim 1, wherein said card (16) is formed of paper cardboard.

## Patentansprüche

1. Compact-Disc-Verpackunq in einem Kartenformat mit:
(a) einer Compact-Disc (10) mit einer spiralförmigen Spuraufzeichnung auf ihrer einen Seite (12), die sich auf ein Gebilde bezieht, wie beispielsweise auf eine Sportfigur, wobei die Compact-Disc auf ihrer entgegengesetzten Seite (13) eine bedruckbare Oberfläche hat; und
(b) einer rechteckigen Karte (16) mit einer darin vorgesehenen kreisförmigen Aussparung (15), in der die Compact-Disc (10) aufbewahrt werden kann, um eine bestückte Karte (16) vorzusehen, bei der die bedruckbare Oberfläche (13) im wesentlichen mit einem Bereich der Karte (16) bündig ist, der die Compact-Disc (10) umgibt, wobei zumindest ein Abschnitt einer Abbildung des Gebildes auf dieser Oberfläche abgedruckt ist.

2. Verpackung nach Anspruch 1, wobei der Rest der Abbildung in dem Bereich abgedruckt ist, der die Compact-Disc umgibt, und die Karte (16) eine Verstärkung (17) hat, deren Innenausschnitt von der Öffnung (15) umgeben ist und den gleichen darauf abgedruckten Abschnitt der Abbildung hat, wodurch die gesamte Abbildung sichtbar ist, ob nun die Compact-Disc (10) in der Öffnung aufbewahrt wird oder nicht.

3. Verpackung nach Anspruch 1, die desweiteren eine aus durchsichtigem Kunststoffmaterial gebildete Hülle (18) zum Aufnehmen der mit einer Compact-Disc bestückten Karte (16) einschließt, die im wesentlichen die gleichen Abmessungen hat, wodurch die Abbildung durch die Hülle sichtbar ist.

4. Verpackung nach Anspruch 1, wobei die bedruckbare Oberfläche (13) durch ein rundes Papierblatt gebildet ist, das auf der entgegengesetzten Seite der Compact-Disc haftet.

5. Verpackung nach Anspruch 2, wobei die Aussparung (15) durch ein Loch in der Karte (16) gebildet ist, und die Verstärkung (17) ein rechteckiges Papierblatt ist, das auf der Rückseite der Karte haftet, um die Rückseite des Loches zu schließen.

6. Verpackung nach Anspruch 5, wobei das Verstärkungsblatt (17) auf seiner Rückseitenfläche aufgedruckte Angaben hat, die sich auf das Gebilde beziehen.

7. Verpackung nach Anspruch 3, wobei die Hülle an ihrem oberen Ende mit einer Fingerkerbe (19) versehen ist, um eine Entnahme der Karte (16) mit eingelegter Compact-Disc zu erleichtern.

8. Verpackung nach Anspruch 1, wobei auf der Compact-Disc eine Klangaufzeichnung ist.

9. Verpackung nach Anspruch 1, wobei auf der Compact-Disc eine Bildaufzeichnung ist.

10. Verpackung nach Anspruch 1, wobei die Karte (16) aus biegbarem Kunststoffmaterial gebildet ist.

11. Verpackung nach Anspruch 1, wobei die Karte (16) aus Pappe gebildet ist.

## Revendications

1. Conditionnement de disque compact dans un format de carte, comprenant:
(a) un disque compact (10) ayant un enregistrement à piste spiroïdale sur l'une (12) de ses faces concernant un personnage, tel qu'une figure du sport, ledit disque ayant une surface imprimable sur sa face opposée (13); et
(b) une carte rectangulaire (16) ayant à l'intérieur un évidement circulaire (15), dans laquelle le disque (10) peut être logé pour fournir une carte chargée (16) dans laquelle la surface imprimable (13) est sensiblement au même niveau qu'une région de la carte (16) entourant le disque (10), au moins une partie d'une image du personnage étant imprimée sur cette surface.

2. Conditionnement selon la revendication 1, dans lequel le reste de l'image est imprimé dans ladite région entourant le disque, ladite carte (16) ayant un support (17) dont une section interne entourée par ledit évidement (15) comporte la même portion de l'image imprimée sur elle, de façon que l'image entière est vue, que le disque (10) soit logé ou pas dans l'évidement.

3. Conditionnement selon la revendication 1, incluant également une chemise (18) formée d'un matériau plastique transparent pour recevoir la carte (16) chargée avec le disque, et ayant sensiblement les mêmes dimensions, de façon que l'image soit visible à travers la chemise.

4. Conditionnement selon la revendication 1, dans lequel ladite surface imprimable (13) est constituée d'une feuille de papier ronde collée sur la face opposée du disque.

5. Conditionnement selon la revendication 2, dans lequel ledit évidement (15) est formé par un trou dans la carte (16) et ledit support (17) est une feuille de papier rectangulaire collée au dos de la carte pour fermer la face arrière du trou.

6. Conditionnement selon la revendication 5, dans lequel la feuille support (17) comprend des données relatives au personnage imprimées sur sa surface arrière.

7. Conditionnement selon la revendication 3, dans lequel ladite chemise est prévue à son extrémité supérieure avec une encoche de doigt (19) pour faciliter l'extraction de la carte (16) chargée avec le disque.

8. Conditionnement selon la revendication 1, dans lequel ledit disque (10) comporte un enregistrement sonore.

9. Conditionnement selon la revendication 1, dans lequel ledit disque (10) comporte un enregistrement vidéo.

10. Conditionnement selon la revendication 1, dans lequel ladite carte (16) est formée d'un matériau plastique souple.

11. Conditionnement selon la revendication 1, dans lequel ladite carte (16) est formée d'un papier cartonné.
